# EUROPEAN PATENT SPECIFICATION

(11) **EP 4 175 337 B1**
(45) Date of publication and mention of the grant of the patent: **25.12.2024**
(21) Application number: 21020526.6
(22) Date of filing: 26.10.2021
(51) Int. Cl.: H04W 8/20, H04W 4/70, H04W 12/30, H04W 12/40

(54) **METHOD FOR MANAGING AT LEAST ONE EUICC INFORMATION SET (EIS) OF A EUICC AND INTERMEDIATE BUFFER PROXY**
VERFAHREN ZUR VERWALTUNG VON MINDESTENS EINEM EUICC-INFORMATIONSSATZ EINES EUICC- UND ZWISCHENPUFFERPROXYS
PROCÉDÉ DE GESTION D'AU MOINS UN ENSEMBLE D'INFORMATIONS EUICC (EIS) D'UN EUICC ET PROXY TAMPON INTERMÉDIAIRE

(43) Date of publication of application: 03.05.2023
(73) Proprietor: Giesecke+Devrient Mobile Security Germany GmbH, 81677 München (DE)
(72) Inventor: Ruiz Litwinski, David, 141-69 Huddinge (SE)
(74) Representative: Giesecke+Devrient IP

(56) References cited:
- WO-A1-2020/071975
- US-A1- 2019 159 016
- GSM ASSOCIATION: "GSM Association Non-confidential Official Document SGP.01 -Embedded SIM Remote Provisioning Architecture Embedded SIM Remote Provisioning Architecture Security Classification: Non-confidential GSM Association Non-confidential Official Document SGP.01 Embedded SIM Remote Provisioning Architecture", 25 February 2019 (2019-02-25), XP055701901, Retrieved from the Internet <URL:https://www.gsma.com/newsroom/wp-content/uploads//SGP.01-v4.0.pdf> [retrieved on 20200605]

## Description

### TECHNICAL FIELD OF THE INVENTION

The invention relates to a method for managing at least one eUICC Information Set (EIS) of a eUICC and an intermediate buffer proxy.

The use of Embedded Universal Integrated Circuit Cards (eUICCs), also referred to as Embedded Subscriber Identity Modules (eSIMs), are becoming increasingly prevalent in consumer and machine-to-machine (M2M) communication fields. Unlike a traditional UICC or SIM card that exists as a removable smart card that is transferrable between multiple devices, an eUICC is an integrated circuit that is not designed to be user removable, i.e., it is generally embedded with or soldered to other electronic components of a device. The eUICC is in general issued by a manufacturer (EUM) often also referred to as Original Equipment Manufacturer (OEM).

### TECHNICAL BACKGROUND

Traditionally, to enable a telecommunications device to connect to a particular mobile network, a SIM card issued by the Mobile Network Operator (MNO) would have to be inserted into the device. In this scheme, to switch the mobile connection to a different MNO, the SIM card for the current MNO would be removed from the device and would be replaced with another SIM card associated with the new MNO. The requirement to swap out SIM cards whenever a connection to a different mobile network is needed constitutes a major flaw, especially in the context of M2M communication. It is much more efficient and desirable to install a single SIM card when the device is manufactured and then enable that SIM card to support a connection to a MNO of a user's choice.

To address this issue, Global System for Mobile Association (GSMA) defines the Remote Provisioning Architecture for Embedded SIM as guidelines for Mobile Operators. An eSIM is built into an IoT device and provides a secure, interoperable architecture to facilitate commercial deployment of a system that enables remote provisioning of a target MNO profile into the eSIM. The GSMA has specified the method and protocols for MNOs to provision their profile information on eSIMs using a wireless communication channel. This method is referred to as Over-The-Air (OTA) provisioning. OTA provisioning of entirely new SIM profiles can be used for devices that travel across operator networks.

In GSMA SGP.01 document "Embedded SIM Remote Provisioning Architecture" Version 4.0, 23 February 2019, GSMA has provided an architecture approach for provisioning and subscription management of M2M devices. The document includes a description of an eUICC registration at a SM-SR. To achieve this the eUICC manufacturer sends a registration request to a SM-SR and the SM-SR, after executing the registration, sends back a registration confirmation.

eSIMs support multiple subscription profiles. These profiles can be added, activated, disabled, and deleted as needed. GSMA has standardized OTA architecture for eSIM profile installation and switching. The profile installation and switching are based on Global Platform Card specifications (v2.2.1). Subscription Manager Data Preparation (SM-DP) function is used for creating SIM profiles, while Subscription Manager Secure Routing (SM-SR) function is used to communicate with eUICC to install, activate, deactivate, and delete profiles. Certificate Issuer (CI) is used for authentication and integrity protection.

An eUICC may be provisioned with one or more eSIM profiles, in which each eSIM profile contains a unique international mobile subscriber identity (IMSI) number that authenticates a subscriber to a wireless communication carrier. Other data that are stored in the eSIM profile may include carrier network information, security authentication information, a list of accessible network services, and/or so forth. The wireless communication carrier may transfer an eSIM profile to the eUICC of a user device in the form of a consumer device or a M2M device via an over-the-air (OTA) update.

Consumer devices are network-capable devices that are generally marketed to individual consumers. For example, these devices may include a smartphone, a tablet computer, a smartwatch, a gaming console, and/or so forth. M2M devices are networked machines that use the telecommunication services provided by the wireless communication carrier to communicate with other networked machines. For example, a M2M monitoring device that is embedded on a vehicle may automatically send vehicle tracking and operation information to a remote support device at a control center. In another example, a M2M device in the form of a smart home appliance may automatically send diagnostic information to a monitoring device at a service center in case of device malfunction.

The eUICC may further comprise a eUICC Information Set (EIS). The eUICC Information Set (EIS) represents the eUICC and can comprise a eUICC identifier, an identifier of the manufacturer of the eUICC and further information, such as a list of profiles associated with the eUICC. The eUICC Information Set (EIS) is defined in the SGP.02 specification..

For some OEMs, EUMs or Service Providers (SPs), there is a need to decide under which conditions and/or at what time the eUICC Information Set (EIS) is pushed to the Subscription Manager Secure Routing (SM-SR) function. For example, a condition for pushing the eUICC Information Set (EIS) to the Subscription Manager Secure Routing (SM-SR) function can be a registered and active subscription of the eUICC at a Home Location Register (HLR) or a knowledge of the MNO that an eUICC is embedded on a device which is about to be powered on. Also, there can be a need for an MNO to have control over multiple EUM providers and to decide which eUICC Information Set (EIS) is loaded to the Subscription Manager Secure Routing (SM-SR) function, from whom the eUICC Information Set (EIS) is loaded to the Subscription Manager Secure Routing (SM-SR) function and when the eUICC Information Set (EIS) is loaded to the Subscription Manager Secure Routing (SM-SR) function. Furthermore, there can be a need to outsource the ES1 interface as defined in the current GSMA SGP.02 specifications to third party integrators. The ES1 interface acts as an interface between the two entities which fulfill the role of EUM and SM-SR function.

However, the current GSMA SGP.02 specifications do not provide such possibilities, as all interactions between EUM or OEM and the SM-SR function have to be synchronous. Furthermore, GSMA SGP.02 specifications fail to provide a component which delays a load to the Subscription Manager Secure Routing (SM-SR) function.

To partially meet the above-mentioned needs of the OEMs, EUMs or SPs, providing a transparent proxy is known from prior art. A transparent proxy intercepts normal application layer communication without requiring any special client configuration. A transparent proxy is a proxy that does not modify the request or response beyond what is required for proxy authentication and identification. Clients need not be aware of the existence of the proxy. The transparent proxy can be provided between the EUM or OEM and the SM-SR function. Although such a transparent proxy could act as a broker between the EUM or OEM and the SM-SR function, it would not be able to delay the load to the Subscription Manager Secure Routing (SM-SR) function.

Alternatively, to partially meet the above-mentioned needs of the OEMs, EUMs or SPs, providing a stop and go proxy is also known from prior art. A stop and go proxy between the EUM or OEM and the SM-SR function would allow to delay the load to the Subscription Manager Secure Routing (SM-SR) function but would endanger the integrity of the chain between the EUM or OEM and the SM-SR function and would present a risk when cloning data of the SM-SR function or at the EUM or OEM.

WO 2020/071975 A1 discloses a solution to register an embedded Universal Integrated Circuit Card (eUICC) for an autonomous device. The method comprises an eUICC manufacturer providing an eUICC to a manufacturer of autonomous devices which requests a specialized SM-SR entity to take over responsibility for provisioning the eUICC. The specialized SM-SR entity informs the eUICC manufacturer of its responsibility.

US 2019/0159016 A1 discloses a solution to provision new SIM profiles onto eSIMs associated with other MNOs comprising a subscription manager (SM)-proxy which is positioned between the SM-DP of a target MNO and the SM-SR of a current MNO. SM-Proxy enables creation, download, activation, and/or deactivation of the target MNO's profile over an existing subscription.

### SUMMARY OF THE INVENTION

The problem to be solved by the present invention is to provide a possibility to delay the load to the SM-SR function without endangering the integrity of the chain between the EUM or OEM and the SM-SR function.

The problem is solved by the method for managing at least one eUICC information set (EIS) of a eUICC according to claim 1 and by an intermediate buffer proxy according to claim 6. Further preferred embodiments of the invention are object of the dependent claims.

The method for managing at least one eUICC information set (EIS) of a eUICC according to the invention comprises the following consecutive steps:
- generating a first request for registering the eUICC information set (EIS) at an eUICC manufacturer (EUM), the first request comprising a first Function Call Identifier (FCI);
- sending the first request from the eUICC manufacturer (EUM) to an intermediate buffer proxy;
- generating a response to the first request within the intermediate buffer proxy; and
- sending the response to the request to the eUICC manufacturer (EUM).

According to an aspect of the present invention, the method further comprises the following consecutive steps:
- after receiving the response to the request to the eUICC manufacturer (EUM) at the eUICC manufacturer (EUM), generating a register results response within the eUICC manufacturer (EUM); and
- sending the register results response to a mobile network operator (MNO).

According to a further aspect of the present invention, the method further comprises the following consecutive steps:
- based on the first request received at the intermediate buffer proxy, generating, at the intermediate buffer proxy, a second request for registering the eUICC information set (EIS), the second request comprising a second Function Call Identifier (FCI); and
- sending the second request from the intermediate buffer proxy to a Subscription Manager Secure Routing (SM-SR) function.

According to a further aspect of the present invention, the method further comprises the following consecutive steps:
- receiving, at the Subscription Manager Secure Routing (SM-SR) function, the second request from the intermediate buffer proxy; and
- verifying, at the Subscription Manager Secure Routing (SM-SR) function, that the eUICC information set (EIS) is present in a eUICC information set (EIS) directory stored on the Subscription Manager Secure Routing (SM-SR) function.

According to a further aspect of the present invention, the method further comprises the following consecutive steps:
- storing the eUICC information set (EIS) in a database of active eUICC information sets (EIS) present at the Subscription Manager Secure Routing (SM-SR) function;
- generating a response to the second request at the Subscription Manager Secure Routing (SM-SR) function; and
- sending the response from the Subscription Manager Secure Routing (SM-SR) function to the second request to the intermediate buffer proxy.

The invention further relates to an intermediate buffer proxy configured to receive a first request from a eUICC manufacturer (EUM), for registering an eUICC information set (EIS), wherein the first request comprises a first Function Call Identifier (FCI), to generate a response to the first request and to sending the response to the request to the eUICC manufacturer (EUM).

According to an aspect of the present invention, the intermediate buffer proxy is further configured to generate a second request for registering the eUICC information set (EIS) and to send the second request to a Subscription Manager Secure Routing (SM-SR) function.

According to a further aspect of the present invention, the intermediate buffer proxy is further configured to receive a response to the second request from the Subscription Manager Secure Routing (SM-SR) function.

According to a further aspect of the present invention, the intermediate buffer proxy further comprises a unique object identifier (OID).

According to a further aspect of the present invention, the intermediate buffer proxy further comprises a Function Requester Identifier (FRI).

The method and the intermediate buffer proxy provide a possibility to delay the load to the SM-SR function without endangering the integrity of the chain between the EUM or OEM and the SM-SR function.

### BRIEF DESCRIPTION OF THE DRAWINGS

The further embodiments of the invention and advantages of the invention are explained in more detail with reference to figures, the figures merely describing examples of embodiments of the invention. Identical components in the figures are provided with the same reference signs. The figures are not to be regarded as true to scale, and in particular individual elements of the figures may be shown in exaggeratedly large or exaggeratedly simplified form.
Fig. 1 shows an example of a method known from prior art using a transparent proxy;
Fig. 2 shows an example of a method known from prior art using a stop ang go proxy;
Fig. 3 shows an example of a method according to the preferred embodiment using an intermediate buffer proxy; and
Fig. 4 shows an example of a mobile communications network comprising an intermediate buffer proxy according to the preferred embodiment.

### DETAILED DESCRIPTION OF THE PREFERRED EMBODIMENT

The present application relates to a method for managing at least one eUICC information set (EIS) of a eUICC and to an intermediate buffer proxy 20. The eUICC are in general issued by a manufacturer (EUM) often also referred to as Original Equipment Manufacturer (OEM).

Traditionally, to enable a telecommunications device to connect to a particular mobile network, a SIM card issued by the Mobile Network Operator (MNO) would have to be inserted into the device. In this scheme, to switch the mobile connection to a different MNO, the SIM card for the current MNO would be removed from the device and would be replaced with another SIM card associated with the new MNO. The requirement to swap out SIM cards whenever a connection to a different mobile network is needed constitutes a major flaw, especially in the context of M2M communication. It is much more efficient and desirable to install a single SIM card when the device is manufactured and then enable that SIM card to support a connection to a MNO of a user's choice.

To address this issue, Global System for Mobile Association (GSMA) defines the Remote Provisioning Architecture for Embedded SIM as guidelines for Mobile Operators. An eSIM is built into an IoT device and provides a secure, interoperable architecture to facilitate commercial deployment of system that enable remote provisioning of a target MNO profile into the eSIM. The GSMA has specified the method and protocols for MNOs to provision their profile information on eSIMs using a wireless communication channel. This method is referred to as Over-The-Air (OTA) provisioning. OTA provisioning of entirely new SIM profiles can be used for devices that travel across operator networks.

eSIMs support multiple subscription profiles. These profiles can be added, activated, disabled, and deleted as needed. GSMA has standardized OTA architecture for eSIM profile installation and switching. The profile installation and switching are based on Global Platform Card specifications (v2.2.1), which is incorporated herein by reference. Subscription Manager Data Preparation (SM-DP) function is used for creating SIM profiles, while Subscription Manager Secure Routing (SM-SR) function is used to communicate with eUICC to install, activate, deactivate, and delete profiles. Certificate Issuer (CI) is used for authentication and integrity protection.

An eUICC may be provisioned with one or more eSIM profiles, in which each eSIM profile contains a unique international mobile subscriber identity (IMSI) number that authenticates a subscriber to a wireless communication carrier. Other data that are stored in the eSIM profile may include carrier network information, security authentication information, a list of accessible network services, and/or so forth. The wireless communication carrier may transfer an eSIM profile to the eUICC of a user device in the form of a consumer device or a M2M device via an over-the-air (OTA) update.

The eUICC may further comprise a eUICC Information Set (EIS). The eUICC Information Set (EIS) represents the eUICC and can comprise a eUICC identifier, an identifier of the manufacturer of the eUICC and further information, such as a list of profiles associated with the eUICC. The eUICC Information Set (EIS) is defined in the SGP.02specification.

For example, the eUICC may have a file system as described in 3GPP TS 11.11 or 3GPP TS 11.14. An eUICC in the sense of the invention can be, for example, an electronic module reduced in size and resources, which has a control unit (microcontroller) and at least one interface (data interface) for communication with the device. This communication preferably takes place via a connection protocol, in particular a protocol in accordance with the ETSI TS 102 221 or ISO-7816 standard.

The eUICC can be an integral part within the device, for example a hard-wired electronic component. These eUICCs are not intended to be removed from the device and cannot, in principle, be easily replaced. Such eUICCs can also be designed as embedded secure elements and are a secure hardware component in the device.

The eUICC can be used for remote monitoring, control and maintenance of equipment such as machines, plants and systems. It can be used for metering units such as electricity meters, hot water meters, etc. For example, eUICC is part of the technology of IoT.

A device in the sense of the invention is in principle a device or a device component with means for communication with a communication network in order to be able to use services of the communication network or to be able to use services of a server via a gateway of the communication network. For example, a mobile device such as a smart phone, a tablet PC, a notebook, a PDA can be included under the term. Multimedia devices such as digital picture frames, audio devices, television sets, e-book readers, which also have means of communicating with the communications network, can also be understood as a device.

The device can be installed in a machine, a vending machine and/or a vehicle. If the device is placed in a motor vehicle, it typically has an integrated eUICC. The eUICC can establish a data connection to a server via the communication network via the device, for example by means of a modem of the device. The device can be used, for example, to contact a server of the device manufacturer (EUM) in order to address control units, e.g. ECUs (ECU = Electronic Control Unit) for functionalities of the device. The eUICC can be used to contact a server in the background system of the mobile network operator, MNO, for example a server to load updates for software, firmware or/and operating system of the eUICC onto the eUICC.

The eUICC is set up, for example, to establish a data connection to a server of the communication network in order to use services of the server or another server and to exchange data. When establishing such a data connection from a eUICC to a server, connection parameters, for example a unique server address and the data connection protocol to be used, are required. For example, a card application toolkit (CAT) of the subscriber identity module in accordance with ETSI standard TS 102 223 is used to establish, terminate and operate a data connection.

A communication network is a technical facility on which the transmission of signals takes place with identification and/or authentication of the subscriber. The communication network offers its own services (its own voice and data services) and/or enables the use of services from external entities. The communication network is preferably a mobile network. Device-to-device communication under supervision of the communication network is thereby possible. In particular, a mobile communications network is understood here to be, for example, the "Global System for Mobile Communications", GSM, as an example for the second generation, or the "General Packet Radio Service", GPRS, or "Universal Mobile Telecommunications System", UMTS, as an example for the third generation, the "Long Term Evolution", LTE, as an example for the fourth generation as a mobile communications network, or a 5th generation mobile communications network with the current working title "5G" as a communications network. Communication in the communication network can take place via a secure channel, for example as defined in the technical standards ETSI TS 102 225 and/or ETSI TS 102 226, for example SCP80, SCP81 or a transport layer security, TLS.

In the sense of the invention, a server is an entity spatially remote from the device. The server may be a part of the communication network. Alternatively or additionally, the server is an external instance (i.e., not an instance of the communication network). Preferably, the server is a server of the device manufacturer to address control units, e.g., electronic control units (ECUs), for functionalities of the device. Alternatively or additionally, the server is a server for remote management of the eUICC, for example a so-called OTA server, to load updates for software, firmware or/and operating system of the eUICC into the eUICC.

Subscriber identity data, as stored for example in the non-volatile memory area of the eUICC, is for example data that uniquely identifies a subscriber (a person or a device) in the communication network. This includes, for example, a subscriber identifier, also known as International Mobile Subscriber Identity, or IMSI, and/or subscriber-specific data. The IMSI is the subscriber identity file that is unique in a mobile communications network. It is composed of the country code MCC (Mobile Country Code), the network code MNC (Mobile Network Code) and a sequential number assigned by the network operator. In addition, subscriber identity data is, for example, data that uniquely authenticates a subscriber to the communications network, such as an authentication algorithm, specific algorithm parameters, a cryptographic authentication key Ki, and/or a cryptographic over-the-air, or OTA, key. In addition, subscriber identity data is, for example, data that uniquely authenticates a subscriber to a service, such as a unique identifier or signature. A service is in particular a voice service or a data service of a server, with which information and/or data are transmitted via the communication network.

The eUICC may be operationally embedded in the device. The communication between the UICC and the device is based on a connection protocol. In addition, the device can also be set up to independently establish a data connection to the remote server in order to also use its services and exchange data with this server.

By means of an OTA communication between servers of the communication network, for example subscription servers SM-SR or data provisioning servers SM-DP, SM-DP+ according to GSMA specifications SGP.02, a profile can be managed, using for example SMS, CAT_TP or HTTPS for over-the-air, OTA, communication with the eUICC. This profile management - which is not part of this description - includes "create", "load", "enable", "disable", "delete" and "update". For details, reference is made to the GSMA specifications mentioned.

For some OEMs, EUMs or Service Providers (SPs), there is a need to decide under which conditions and/or at what time the eUICC Information Set (EIS) is pushed to the Subscription Manager Secure Routing (SM-SR) function. For example, a condition for pushing the eUICC Information Set (EIS) to the Subscription Manager Secure Routing (SM-SR) function can be a registered and active subscription of the eUICC at a Home Location Register (HLR) or a knowledge of the MNO that an eUICC is embedded on a device which is about to be powered on. Also, there can be a need for an MNO to have control over multiple EUM providers and to decide which eUICC Information Set (EIS) is loaded to the Subscription Manager Secure Routing (SM-SR) function, from whom the eUICC Information Set (EIS) is loaded to the Subscription Manager Secure Routing (SM-SR) function and when the eUICC Information Set (EIS) is loaded to the Subscription Manager Secure Routing (SM-SR) function. Furthermore, there can be a need to outsource the ES1 interface as defined in the current GSMA SGP.02 specifications to third party integrators. The ES1 interface acts as an interface between the two entities which fulfill the role of EUM and SM-SR function.

However, the current GSMA SGP.02 specifications do not provide such possibilities, as all interactions between EUM or OEM and the SM-SR function have to be synchronous. Furthermore, GSMA SGP.02 specifications fail provide a component which delays a load to the Subscription Manager Secure Routing (SM-SR) function.

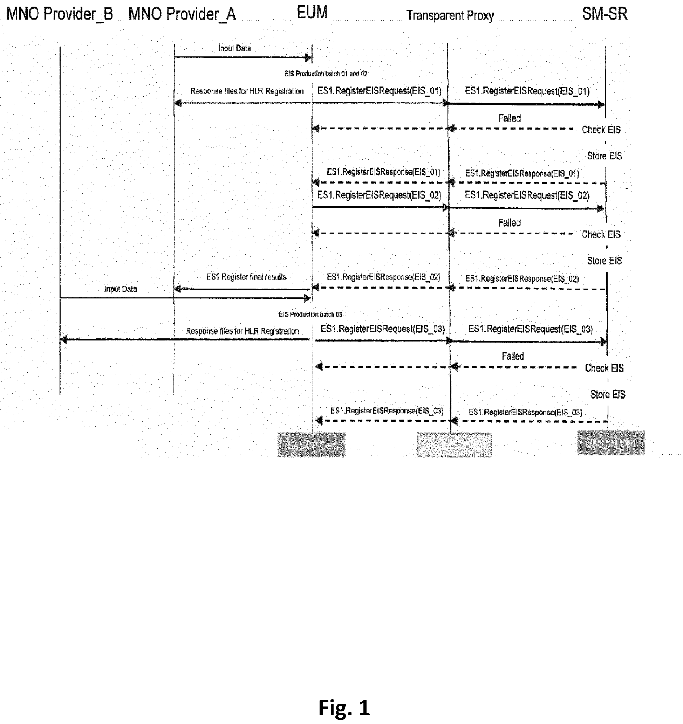

To partially meet the above-mentioned needs of the OEMs, EUMs or SPs, providing a transparent proxy is known from prior art. A method known from prior art employing such a transparent proxy is depicted in Fig. 1. A transparent proxy intercepts normal application layer communication without requiring any special client configuration. A transparent proxy is a proxy that does not modify the request or response beyond what is required for proxy authentication and identification. Clients need not be aware of the existence of the proxy. The transparent proxy can be provided between the EUM or OEM and the SM-SR function.

Such a transparent proxy can be a single point of provisioning of EIS data where MNO data whose destination is the SM-SR function can be generated by the EUMs or OEMs and seamlessly passed on to the SM-SR function through BSS of the mobile communications network in a secure and standardized manner. For the use of a transparent proxy between the EUM or OEM and the SM-SR function, the transparent proxy needs to employ the same Function Requester Identifier (FRI) and the same Function Call Identifier (FCI) as the EUM or OEM. A validity period of the requests can be optionally set.

All the parameters used by the EUM or OEM in the request which is sent to the transparent proxy are passed on the SM-SR function without being modified. The EUM or OEM and the transparent proxy employ the ES 1 interface as defined by the GSMA SGP.02 specifications. The request can be a request "ES1.RegiseterEISRequest" as defined in the GSMA SGP.02 specifications.

Although such a transparent proxy could act as a broker between the EUM or OEM and the SM-SR function, it would not be able to delay the load to the Subscription Manager Secure Routing (SM-SR) function.

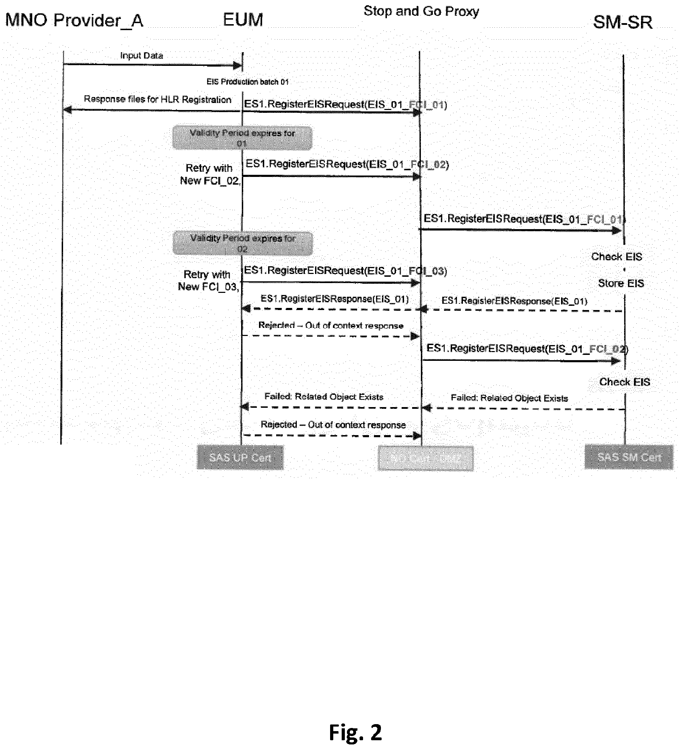

Alternatively, to partially meet the above-mentioned needs of the OEMs, EUMs or SPs, providing a stop and go proxy is also known from prior art. A method known from prior art employing such a stop ang go proxy is depicted in Fig. 2.

According to such an approach, a different FCI can be used by the proxy and the EUM or OEM. This, however, would break the trust on the chain of the EUM or OEM to the SM-SR function. Furthermore, an expiration of the validity period of the requests could cause unknow behavior towards the EUM or OEM, the proxy and/or the SM-SR function. For instance, endless loops could be occurring for a single EIS that may or may not have been registered, when for instance retry mechanisms start acting. According to this approach, it is not possible to inform back the MNO from the EUM or OEM when the request "RegisterEIS" was successful. Any changes on the stop and go proxy side or on the EUM or OEM side will affect all MNOs and all SM-Sr functions supported by the EUM or OEM.

A stop and go proxy between the EUM or OEM and the SM-SR function would allow to delay the load to the Subscription Manager Secure Routing (SM-SR) function but would endanger the integrity of the chain between the EUM or OEM and the SM-SR function and would present a risk when cloning data of the SM-SR function or at the EUM or OEM.

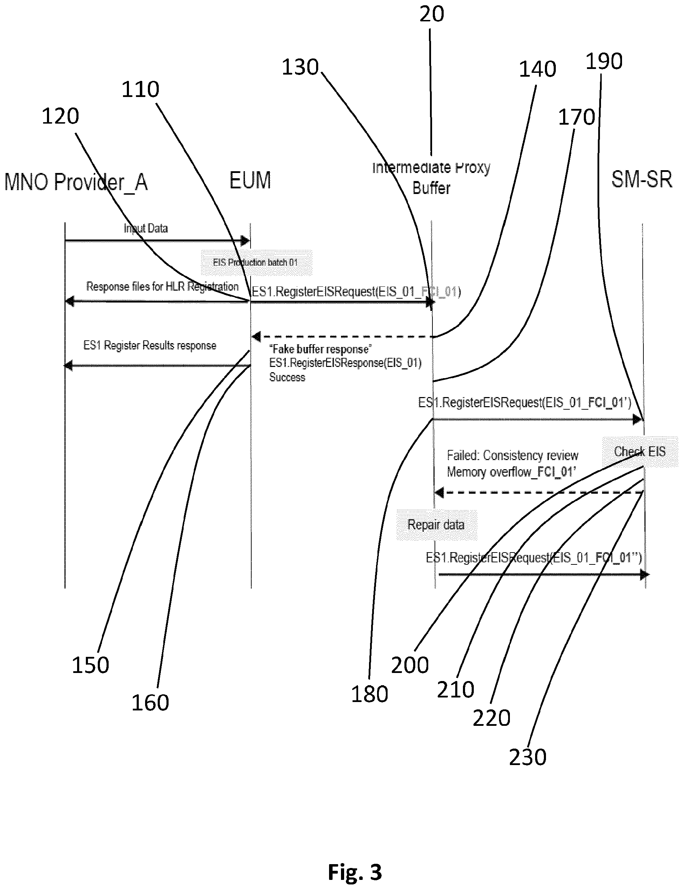

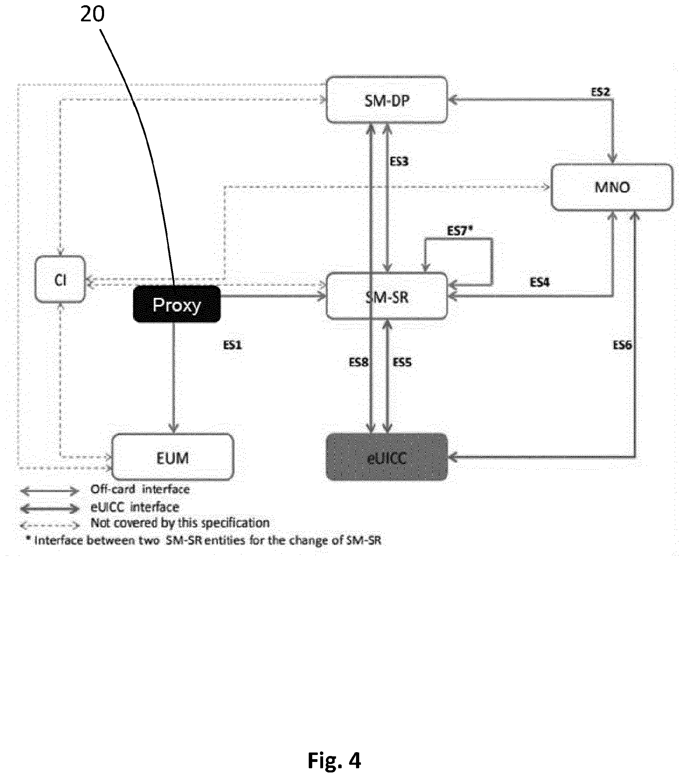

Fig. 3 shows an example of a method according to the preferred embodiment using an intermediate buffer proxy and Fig. 4 shows an example of a mobile communications network comprising an intermediate buffer proxy according to the preferred embodiment.

According to the present embodiment, the method for managing at least one eUICC information set (EIS) of an eUICC comprises the following consecutive steps:
- generating 110 a first request for registering the eUICC information set (EIS) at an eUICC manufacturer (EUM), the first request comprising a first Function Call Identifier (FCI);
- sending 120 the first request from the eUICC manufacturer (EUM) to an intermediate buffer proxy 20;
- generating 130 a response to the first request within the intermediate buffer proxy (20); and
- sending 140 the response to the request to the eUICC manufacturer (EUM).

The intermediate buffer proxy according to the present application is configured to receive a first request from a eUICC manufacturer (EUM), to generate a response to the first request and to sending the response to the request to the eUICC manufacturer (EUM).

The method and the intermediate buffer proxy 20 according to the present embodiment provides a possibility to delay the load to the SM-SR function without endangering the integrity of the chain between the EUM or OEM and the SM-SR function.

In other words, the intermediate buffer proxy 20 simulates a response of the SM-SR function for the EUM or OEM or responds with a fake response to avoid invalidation of the request after the expiration of the validity period of the request. Hence, the intermediate buffer proxy 20 acts as the SM-SR for the EUM or OEM.

The term MNO may be used synonymously with an MNO server communicating in the mobile network. The term EUM may be used synonymously with an EUM server communicating in the mobile network. The term SM-SR function may be used synonymously with an SM-SR server running the SM-SR function and communicating in the mobile network.

Before generating 110 and sending 120 the first request, the EUM or OEM may receive input data from the MNO. When sending 120 the first request to the intermediate buffer proxy 20, the EUM may simultaneously send response files for HLR registration to the MNO. After receiving the response to the request at the EUM, the EUM may send an "ES1 Register Results Response" to the MNO.

The intermediate buffer proxy 20 may have to create a new FCI for its communication with the SM-SR function, in particular if the FCI originating from the EUM or OEM has expired. Data validation can be conducted on the intermediate buffer proxy 20 until the request is validated by the SM-SR.

The intermediate buffer proxy 20 may be identified by its own Object Identifier (OID) and comprise its own FRI.

EIS data manipulation can be conducted on the intermediate buffer proxy 20 instead of being conducted on the EUM or OEM, for example.

A correlation of the FCI from the EUM or OEM and the FCI employed by the intermediate buffer proxy 20 can be tracked by the intermediate buffer proxy 20. This can ensure the integrity of the communication end-to-end between the EUM or OEM and the intermediate buffer proxy 20.

The method may further comprise the following consecutive steps:
- after receiving the response to the request to the eUICC manufacturer (EUM) at the eUICC manufacturer (EUM), generating 150 a register results response within the eUICC manufacturer (EUM); and
- sending 160 the register results response to a mobile network operator (MNO) .

Preferably, the method may further comprise the following consecutive steps:
- based on the first request received at the intermediate buffer proxy 20, generating 170, at the intermediate buffer proxy 20, a second request for registering the eUICC information set (EIS), the second request comprising a second Function Call Identifier (FCI); and
- sending 180 the second request from the intermediate buffer proxy 20 to a Subscription Manager Secure Routing (SM-SR) function.

The intermediate buffer proxy 20 may further be configured to generate a second request for registering the eUICC information set (EIS) and to send the second request the Subscription Manager Secure Routing (SM-SR) function.

Additionally, the method may further comprise the following consecutive steps:
- receiving 190, at the Subscription Manager Secure Routing SM-SR function, the second request from the intermediate buffer proxy 20; and
- verifying 200, at the Subscription Manager Secure Routing (SM-SR) function, that the eUICC information set (EIS) is present in a eUICC information set (EIS) directory stored on the Subscription Manager Secure Routing (SM-SR) function.

Furthermore, the method may further comprise the following consecutive steps:
- storing 210 the eUICC information set (EIS) in a database of active eUICC information sets (EIS) present at the Subscription Manager Secure Routing (SM-SR) function;
- generating 220 a response to the second request at the Subscription Manager Secure Routing (SM-SR) function; and
- sending 230 the response from the Subscription Manager Secure Routing (SM-SR) function to the second request to the intermediate buffer proxy 20.

The intermediate buffer proxy 20 may further be configured to receive a response to the second request from the Subscription Manager Secure Routing (SM-SR) function.

The intermediate buffer proxy 20 may further comprise a unique object identifier (OID and/or a unique Function Requester Identifier (FRI).

In other words, the intermediate buffer proxy 20 acts as SM-SR function towards the EUM and the intermediate buffer proxy 20 acts as the EUM towards the SM-SR function. The intermediate buffer proxy 20 may send a pseudo-response to the EUM in response to a request for registration of a new EIS to the SM-SR function. The pseudo-response received at the EUM may trigger a registration response at the EUM which is sent to the MNO for confirmation. A redirection of the request received by the intermediate buffer proxy 20 to the SM-SR function may then be initiated at a later time, which may be chosen by the MNO, EUM, OEM or SP.

The intermediate buffer proxy 20 may hence act as a bridge for settlement and reconciliation of data exchanged between EUM or OEM and SM-SR function.

The intermediate proxy buffer 20 may send fake responses to avoid validity periods expirations on EUM.

The intermediate proxy buffer 20 may "impersonate", that is act as the SM-SR to respond to the EUM immediately and avoid validity period expiration.

The invention is set out in the appended set of claims.

## Claims

1. Method for managing at least one eUICC information set EIS of a eUICC, comprising the following consecutive steps:
- generating (110), at a eUICC manufacturer, EUM, a first request for registering the eUICC information set EIS, the first request comprising a first Function Call Identifier FCI;
- sending (120) the first request from the eUICC manufacturer EUM to an intermediate buffer proxy (20);
- generating (130) a response to the first request within the intermediate buffer proxy (20); and
- sending (140) the response to the request to the eUICC manufacturer EUM.

2. Method according to claim 1, **characterized in that** it further comprises the following consecutive steps:
- after receiving the response to the request to the eUICC manufacturer EUM at the eUICC manufacturer EUM, generating (150) a register results response within the eUICC manufacturer EUM; and
- sending (160) the register results response to a mobile network operator, MNO.

3. Method according to any of the claims 1 or 2, **characterized in that** it further comprises the following consecutive steps:
- based on the first request received at the intermediate buffer proxy (20), generating (170), at the intermediate buffer proxy (20), a second request for registering the eUICC information set EIS, the second request comprising a second Function Call Identifier FCI; and
- sending (180) the second request from the intermediate buffer proxy (20) to a Subscription Manager Secure Routing SM-SR function.

4. Method according to claim 3, **characterized in that** it further comprises the following consecutive steps:
- receiving (190), at the Subscription Manager Secure Routing SM-SR function, the second request from the intermediate buffer proxy (20); and
- verifying (200), at the Subscription Manager Secure Routing SM-SR function, that the eUICC information set EIS is present in a eUICC information set EIS directory stored on the Subscription Manager Secure Routing SM-SR function.

5. Method according to claim 4, **characterized in that** it further comprises the following consecutive steps:
- storing (210) the eUICC information set EIS in a database of active eUICC information sets EIS present at the Subscription Manager Secure Routing SM-SR function;
- generating (220) a response to the second request at the Subscription Manager Secure Routing SM-SR function; and
- sending (230) the response from the Subscription Manager Secure Routing SM-SR function to the second request to the intermediate buffer proxy (20).

6. Intermediate buffer proxy configured to receive a first request from a eUICC manufacturer EUM for registering an eUICC information set EIS, wherein the first request comprises a first Function Call Identifier FCI, wherein the intermediate buffer proxy is further configured to generate a response to the first request and to send the response to the request to the eUICC manufacturer EUM.

7. Intermediate buffer proxy according to claim 6, **characterized in that** it is further configured to generate a second request for registering the eUICC information set EIS and to send the second request to a Subscription Manager Secure Routing SM-SR function.

8. Intermediate buffer proxy according to claim 7, **characterized in that** it is further configured to receive a response to the second request from the Subscription Manager Secure Routing SM-SR function.

9. Intermediate buffer proxy according to any of the claims 6 to 8, **characterized in that** it comprises a unique object identifier, OID.

10. Intermediate buffer proxy according to any of the claims 6 to 9, **characterized in that** it comprises a unique Function Requester Identifier, FRI.

11. Intermediate buffer proxy according to any of the claims 6 to 10, **characterized in that** it is configured to create a new Function Call Identifier FCI for its communication with the Subscription Manager Secure Routing SM-SR function.

## Patentansprüche

1. Verfahren zum Verwalten mindestens eines eUICC-Informationssatzes EIS einer eUICC, die folgenden aufeinanderfolgenden Schritte umfassend:
- Erzeugen (110), an einem eUICC-Hersteller, EUM, einer ersten Anforderung zum Registrieren des eUICC-Informationssatzes EIS, die erste Anforderung eine erste Funktionsaufrufkennung FCI umfassend;
- Senden (120) der ersten Anforderung von dem eUICC-Hersteller EUM an einen Zwischenspeicher-Proxy (20) ;
- Erzeugen (130) einer Antwort auf die erste Anforderung in dem Zwischenspeicher-Proxy (20); und
- Senden (140) der Antwort auf die Anforderung an den eUICC-Hersteller EUM.

2. Verfahren nach Anspruch 1, **dadurch gekennzeichnet, dass** es ferner die folgenden aufeinanderfolgenden Schritte umfasst:
- nach dem Empfangen der Antwort auf die Anforderung an den eUICC-Hersteller EUM an dem eUICC-Hersteller EUM Erzeugen (150) einer Registerergebnisse-Antwort bei dem eUICC-Hersteller EUM; und
- Senden (160) der Registerergebnisse-Antwort an einen Mobilnetzwerkbetreiber, MNO.

3. Verfahren nach einem der Ansprüche 1 oder 2, **dadurch gekennzeichnet, dass** es ferner die folgenden aufeinanderfolgenden Schritte umfasst:
- basierend auf der ersten an dem Zwischenspeicher-Proxy (20) empfangenen Anforderung Erzeugen (170), bei dem Zwischenspeicher-Proxy (20), einer zweiten Anforderung zum Registrieren des eUICC-Informationssatzes EIS, die zweite Anforderung eine zweite Funktionsaufrufkennung FCI umfassend; und
- Senden (180) der zweiten Anforderung von dem Zwischenspeicher-Proxy (20) an eine Funktion für sicheres Routing eines Abonnement-Verwalters SM-SR.

4. Verfahren nach Anspruch 3, **dadurch gekennzeichnet, dass** es ferner die folgenden aufeinanderfolgenden Schritte umfasst:
- Empfangen (190), an der Funktion für sicheres Routing eines Abonnement-Verwalters SM-SR, der zweiten Anforderung von dem Zwischenspeicher-Proxy (20); und
- Verifizieren (200), an der Funktion für sicheres Routing eines Abonnement-Verwalters SM-SR, dass der eUICC-Informationssatz EIS in einem bei der Funktion für sicheres Routing eines Abonnement-Verwalters SM-SR gespeicherten eUICC-Informationssatz- bzw. EIS-Verzeichnis vorhanden ist.

5. Verfahren nach Anspruch 4, **dadurch gekennzeichnet, dass** es ferner die folgenden aufeinanderfolgenden Schritte umfasst:
- Speichern (210) des eUICC-Informationssatzes EIS in einer Datenbank von an der Funktion für sicheres Routing eines Abonnement-Verwalters SM-SR vorhandenen aktiven eUICC-Informationssätzen EIS;
- Erzeugen (220) einer Antwort auf die zweite Anforderung an der Funktion für sicheres Routing eines Abonnement-Verwalters SM-SR; und
- Senden (230) der Antwort von der Funktion für sicheres Routing eines Abonnement-Verwalters SM-SR auf die zweite Anforderung an den Zwischenspeicher-Proxy (20) .

6. Zwischenspeicher-Proxy, konfiguriert zum Empfangen einer ersten Anforderung von einem eUICC-Hersteller EUM zum Registrieren eines eUICC-Informationssatzes EIS, wobei die erste Anforderung eine erste Funktionsaufrufkennung FCI umfasst, wobei der Zwischenspeicher-Proxy ferner konfiguriert ist zum Erzeugen einer Antwort auf die erste Anforderung und zum Senden der Antwort auf die Anforderung an den eUICC-Hersteller EUM.

7. Zwischenspeicher-Proxy nach Anspruch 6, **dadurch gekennzeichnet, dass** er ferner konfiguriert ist zum Erzeugen einer zweiten Anforderung zum Registrieren des eUICC-Informationssatzes EIS und zum Senden der zweiten Anforderung an eine Funktion für sicheres Routing eines Abonnement-Verwalters SM-SR.

8. Zwischenspeicher-Proxy nach Anspruch 7, **dadurch gekennzeichnet, dass** er ferner konfiguriert ist zum Empfangen einer Antwort auf die zweite Anforderung von der Funktion für sicheres Routing eines Abonnement-Verwalters SM-SR.

9. Zwischenspeicher-Proxy nach einem der Ansprüche 6 bis 8, **dadurch gekennzeichnet, dass** er eine eindeutige Objektkennung, OID, umfasst.

10. Zwischenspeicher-Proxy nach einem der Ansprüche 6 bis 9, **dadurch gekennzeichnet, dass** er eine eindeutige Funktionsanfordererkennung, FRI, umfasst.

11. Zwischenspeicher-Proxy nach einem der Ansprüche 6 bis 10, **dadurch gekennzeichnet, dass** er konfiguriert ist zum Erstellen einer neuen Funktionsaufrufkennung FCI für seine Kommunikation mit der Funktion für sicheres Routing eines Abonnement-Verwalters SM-SR.

## Revendications

1. Procédé de gestion d'au moins un ensemble d'informations eUICC, EIS, d'un eUICC, comprenant les étapes consécutives suivantes :
- générer (110), au niveau d'un fabricant d'eUICC, EUM, une première demande d'enregistrement de l'ensemble d'informations eUICC, EIS, la première demande comprenant un premier identifiant d'appel de fonction FCI ;
- envoyer (120) la première demande depuis le fabricant d'eUICC, EUM, à un proxy tampon intermédiaire (20) ;
- générer (130) une réponse à la première demande dans le proxy tampon intermédiaire (20) ; et
- envoyer (140) la réponse à la demande au fabricant d'eUICC, EUM.

2. Procédé selon la revendication 1, **caractérisé en ce qu'**il comprend en outre les étapes consécutives suivantes :
- après réception de la réponse à la demande adressée au fabricant d'eUICC, EUM, au niveau du fabricant d'eUICC, EUM, générer (150) une réponse aux résultats de registre dans le fabricant d'eUICC, EUM ; et
- envoyer (160) la réponse de résultats de registre à un opérateur de réseau mobile, MNO.

3. Procédé selon l'une quelconque des revendications 1 ou 2, **caractérisé en ce qu'**il comprend en outre les étapes consécutives suivantes :
- sur la base de la première demande reçue par le proxy tampon intermédiaire (20), générer (170), au niveau du proxy tampon intermédiaire (20), une deuxième demande d'enregistrement de l'ensemble d'informations eUICC, EIS, la deuxième demande comprenant un deuxième identifiant d'appel de fonction, FCI ; et
- envoyer (180) la deuxième demande depuis le proxy tampon intermédiaire (20) vers une fonction de routage sécurisé de gestionnaire d'abonnement, SM-SR.

4. Procédé selon la revendication 3, **caractérisé en ce qu'**il comprend en outre les étapes consécutives suivantes :
- recevoir (190), au niveau de la fonction de routage sécurisé de gestionnaire d'abonnement, SM-SR, la deuxième demande émanant du proxy tampon intermédiaire (20) ; et
- vérifier (200), au niveau de la fonction de routage sécurisé de gestionnaire d'abonnement, SM-SR, que l'ensemble d'informations eUICC, EIS, est présent dans un répertoire d'ensemble d'informations eUICC, EIS, stocké dans la fonction de routage sécurisé de gestionnaire d'abonnement, SM-SR.

5. Procédé selon la revendication 4, **caractérisé en ce qu'**il comprend en outre les étapes consécutives suivantes :
- stocker (210) l'ensemble d'informations eUICC, EIS, dans une base de données d'ensembles d'informations eUICC, EIS, actifs présents sur la fonction de routage sécurisé de gestionnaire d'abonnement, SM-SR ; et
- générer (220) une réponse à la deuxième demande au niveau de la fonction de routage sécurisé de gestionnaire d'abonnement, SM-SR ; et
- envoyer (230) la réponse depuis la fonction de routage sécurisé de gestionnaire d'abonnement, SM-SR, vers le proxy tampon intermédiaire (20).

6. Proxy tampon intermédiaire configuré pour recevoir une première demande en provenance d'un fabricant d'eUICC, EUM, pour l'enregistrement d'un ensemble d'informations eUICC, EIS, où la première demande comprend un premier identifiant d'appel de fonction, FCI, où le proxy tampon intermédiaire est en outre configuré pour générer une réponse à la première demande et pour envoyer la réponse à la demande au fabricant d'eUICC, EUM.

7. Proxy tampon intermédiaire selon la revendication 6, **caractérisé en ce qu'**il est en outre configuré pour générer une deuxième demande d'enregistrement de l'ensemble d'informations eUICC, EIS, et pour envoyer la deuxième demande à une fonction de routage sécurisé de gestionnaire d'abonnement, SM-SR.

8. Proxy tampon intermédiaire selon la revendication 7, **caractérisé en ce qu'**il est en outre configuré pour recevoir une réponse à la deuxième demande de la fonction de routage sécurisé de gestionnaire d'abonnement, SM-SR.

9. Proxy tampon intermédiaire selon l'une quelconque des revendications 6 à 8, **caractérisé en ce qu'**il comprend un identifiant d'objet unique, OID.

10. Proxy tampon intermédiaire selon l'une quelconque des revendications 6 à 9, **caractérisé en ce qu'**il comprend un identifiant de demandeur de fonction unique, FRI.

11. Proxy tampon intermédiaire selon l'une quelconque des revendications 6 à 10, **caractérisé en ce qu'**il est configuré pour créer un nouvel identifiant d'appel de fonction, FCI, pour sa communication avec la fonction de routage sécurisé de gestionnaire d'abonnement, SM-SR.
